# EUROPÄISCHE PATENTSCHRIFT

(11) **EP 3 612 430 B1**
(45) Veröffentlichungstag und Bekanntmachung des Hinweises auf die Patenterteilung: **12.11.2025**
(21) Anmeldenummer: 18727183.8
(22) Anmeldetag: 14.05.2018
(51) Int. Cl.: B61L 27/04, B61L 3/12, B61L 23/34, B61L 23/14

(54) **VERFAHREN ZUM BETREIBEN EINES SPURGEBUNDENEN VERKEHRSSYSTEMS UND VORRICHTUNG**
METHOD FOR OPERATING A TRACK-BOUND TRAFFIC SYSTEM AND APPARATUS
PROCÉDÉ POUR FAIRE FONCTIONNER UN SYSTÈME DE CIRCULATION GUIDÉ ET DISPOSITIF

(30) Priorität: 13.06.2017 DE 102017209926
(43) Veröffentlichungstag der Anmeldung: 26.02.2020
(73) Patentinhaber: Siemens Mobility GmbH, 80997 München (DE)
(72) Erfinder: ALONSO GARRIDO, Oscar, 28760 Tres Cantos (ES); LÜHRS, Peter, 38126 Braunschweig (DE); RAHN, Karsten, 38162 Cremlingen (DE)
(74) Vertreter: Siemens Patent Attorneys
(86) Internationale Anmeldenummer: PCT/EP2018/062282
(87) Internationale Veröffentlichungsnummer: WO 2018/228758

(56) Entgegenhaltungen:
- EP-A2- 1 612 118
- EP-B1- 1 612 118
- WO-A1-2016/198231
- DE-A1- 102014 218 527
- WERNER KIRCHNER ET AL: "ETCS Level 1 Limited Supervision-Migration von ETCS in die vorhandene Bahninfrastruktur", SIGNAL + DRAHT, DVV, vol. 106, no. 7/08, 1 July 2014 (2014-07-01), pages 29 - 34, XP001590263, ISSN: 0037-4997

## Beschreibung

Spurgebundene Verkehrssysteme verwenden üblicherweise im Rahmen des Betriebs der in ihnen verkehrenden spurgebundenen Fahrzeuge, die beispielsweise als Schienenfahrzeuge, Magnetschwebebahnen oder auch spurgeführte Fahrzeuge mit Gummibereifung ausgeführt sein können, Zugbeeinflussungs- beziehungsweise Zugsicherungssysteme. Im Falle von spurgebundenen Fahrzeugen in Form von Schienenfahrzeugen kann es sich bei einem entsprechenden System beispielsweise um ein kommunikationsbasiertes Zugbeeinflussungssystem handeln, das auch als CBTC (Communications-Based Train Control)-System bezeichnet wird. In einem solchen System ist das Detektieren von Fahrzeugen beziehungsweise Zügen in einem Bereich vor und/oder hinter dem jeweiligen spurgebundenen Fahrzeug beispielsweise dafür von grundlegender Bedeutung, einen durch das Zugsicherungssystem überwachten Moving Block-Betrieb, d.h. ein Fahren im wandernden Raumabstand, zu ermöglichen.

Bei entsprechenden zu detektierenden Zügen kann es sich grundsätzlich sowohl um solche handeln, die ihre eigene Position kennen und an eine Steuereinrichtung des Zugbeeinflussungssystems melden, als auch um solche, die dies nicht tun. Bei letztgenannten "non-reporting trains" kann einerseits die Situation vorliegen, dass die betreffenden spurgebundenen Fahrzeuge ihre Position generell nicht kennen beziehungsweise melden können. Andererseits kann auch bei solchen spurgebundenen Fahrzeugen, die ihre Position grundsätzlich kennen, die Situation auftreten, dass das betreffende spurgebundene Fahrzeug beispielsweise aufgrund eines technischen Defekts, etwa eines Ausfalls einer Kommunikationsverbindung, seine Position nicht bestimmen oder nicht melden kann. Im Ergebnis kann damit in Abhängigkeit von der jeweiligen Situation und den jeweiligen Gegebenheiten eine Unsicherheit dahingehend bestehen, ob ein zwischen einem spurgebundenen Fahrzeug und einem zweiten Streckenabschnitt gelegener Teil eines ersten Streckenabschnitts frei von anderen spurgebundenen Fahrzeugen ist oder nicht.

Dokument EP 1 612 118 A2 beschreibt ein Verfahren, welches das Empfangen von Fahrerlaubnisdaten und Fahrroutendaten von punktförmigen aktiven Systemen umfasst, die in einem Abstand voneinander angeordnet sind. Informationen über ein von einem Sicherheitssystem unabhängiges Informationsübertragungssystem werden empfangen, so dass neue Fahrerlaubnisdaten in dem punktförmigen aktiven System gefunden werden.

Dokument DE 10 2014 218527 A1 betrifft ein Verfahren zum Erzeugen einer Geschwindigkeitsempfehlung für ein Schienenfahrzeug, bei dem das Schienenfahrzeug auf einer Schienenstrecke fährt, die in mehrere aufeinander folgende Streckenabschnitte unterteilt ist. Einer der Streckenabschnitte ist für eine Einfahrt des Schienenfahrzeugs gesperrt. Eine Freigabedauer wird ermittelt, nach deren Ablauf der gesperrte Streckenabschnitt für die Einfahrt des Schienenfahrzeugs freigegeben sein wird, und unter Verwendung der Freigabedauer wird eine empfohlene Geschwindigkeit für das Schienenfahrzeug ermittelt.

Dokument WO 2016/198231 A1 beschreibt ein Verfahren und eine Vorrichtung zum Ermitteln einer Fahrberechtigung für ein spurgebundenes Fahrzeug. Das Verfahren und die Vorrichtung ermöglichen eine Beeinflussung des Fahrbetriebs, wobei auftretende Störungen so gering wie möglich gehalten werden sollen. Die Position des spurgebundenen Fahrzeugs wird bestimmt und es wird geprüft, ob sich das spurgebundene Fahrzeug vollständig in einem Achszählabschnitt eines Achszählsystems befindet. Die Anzahl der Achsen des spurgebundenen Fahrzeugs wird mit der Anzahl der Achsen verglichen, die im entsprechenden Achszählabschnitt gemäß dem Achszählsystem zu finden sind. Wenn sich das spurgebundene Fahrzeug vollständig in dem relevanten Achszählabschnitt befindet und die Anzahl der Achsen des spurgebundenen Fahrzeugs mit der Anzahl der Achsen in dem Achszählabschnitt übereinstimmt, wird eine Fahrerlaubnis für das spurgebundene Fahrzeug erzeugt.

Der vorliegenden Erfindung liegt die Aufgabe zugrunde, ein Verfahren zum Betreiben eines spurgebundenen Verkehrssystems anzugeben, das es auf besonders leistungsfähige und zugleich mit vergleichsweise geringem Aufwand realisierbare Art und Weise ermöglicht, zu erkennen, dass ein zwischen einem spurgebundenen Fahrzeug und einem zweiten Streckenabschnitt gelegener Teil eines ersten Streckenabschnitts frei von anderen spurgebundenen Fahrzeugen ist.

Diese Aufgabe wird erfindungsgemäß gelöst durch ein Verfahren zum Betreiben eines spurgebundenen Verkehrssystems, wobei von einer in einem ersten Streckenabschnitt in einem Abstand zu einem benachbarten zweiten Streckenabschnitt angeordneten streckenseitigen Einrichtung eine den zweiten Streckenabschnitt als frei von spurgebundenen Fahrzeugen kennzeichnende Statusinformation ausgesendet wird, die ausgesendete Statusinformation durch ein den ersten Streckenabschnitt befahrendes spurgebundenes Fahrzeug am Ort der streckenseitigen Einrichtung empfangen wird, wobei der Abstand der streckenseitigen Einrichtung von dem zweiten Streckenabschnitt derart bemessen ist, dass beim Empfang der Statusinformation durch das spurgebundene Fahrzeug ein kürzestes in dem spurgebundenen Verkehrssystem betriebenes zeug nicht in einen zwischen dem spurgebundenen Fahrzeug und dem zweiten Streckenabschnitt gelegenen Teil des ersten Streckenabschnitts passt, und seitens des spurgebundenen Fahrzeugs basierend auf der empfangenen Statusinformation der zwischen dem spurgebundenen Fahrzeug und dem zweiten Streckenabschnitt gelegene Teil des ersten Streckenabschnitts als frei von anderen spurgebundenen Fahrzeugen erkannt wird.

Gemäß dem ersten Merkmal des erfindungsgemäßen Verfahrens zum Betreiben eines spurgebundenen Verkehrssystems wird somit von einer in einem ersten Streckenabschnitt in einem Abstand zu einem zweiten Streckenabschnitt angeordneten streckenseitigen Einrichtung eine den zweiten Streckenabschnitt als frei von spurgebundenen Fahrzeugen kennzeichnende Statusinformation ausgesendet. Dabei ist durch entsprechende Maßnahmen sichergestellt, dass die den zweiten Streckenabschnitt als frei von spurgebundenen Fahrzeugen kennzeichnende Statusinformation von der streckenseitigen Einrichtung nur dann ausgesendet wird, wenn der zweite Streckenabschnitt tatsächlich frei von spurgebundenen Fahrzeugen ist. Vorzugsweise sind die streckenseitige Einrichtung sowie gegebenenfalls weitere an einer Bestimmung des Belegungs- beziehungsweise Freizustandes des zweiten Streckenabschnitts beteiligte Komponenten hierbei signaltechnisch sicher ausgeführt, um den hohen Sicherungsanforderungen der Eisenbahnsignaltechnik zu genügen.

Gemäß dem zweiten Schritt des erfindungsgemäßen Verfahrens wird die ausgesendete Statusinformation durch ein den ersten Streckenabschnitt befahrendes spurgebundenes Fahrzeug am Ort der streckenseitigen Einrichtung empfangen, wobei der Abstand der streckenseitigen Einrichtung von dem zweiten Streckenabschnitt derart bemessen ist, dass beim Empfang der Statusinformation durch das spurgebundene Fahrzeug ein kürzestes in dem spurgebundenen Verkehrssystem betriebenes Fahrzeug nicht in einen zwischen dem spurgebundenen Fahrzeug und dem zweiten Streckenabschnitt gelegenen Teil des ersten Streckenabschnitts passt. Mit der Statusinformation übermittelt die streckenseitige Einrichtung dem spurgebundenen Fahrzeug eine Information dahingehend, dass der zweite Streckenabschnitt frei von spurgebundenen Fahrzeugen, d.h. unbelegt beziehungsweise frei, ist. Dadurch, dass das spurgebundene Fahrzeug die Statusinformation am Ort der streckenseitigen Einrichtung empfängt, ist hierbei sichergestellt, dass zu dem Zeitpunkt, zu dem das spurgebundene Fahrzeug die Statusinformation empfängt, sich auch in dem zwischen der streckenseitigen Einrichtung und dem zweiten Streckenabschnitt liegenden Teil des ersten Streckenabschnitts kein anderes beziehungsweise sonstiges spurgebundenes Fahrzeug befindet beziehungsweise "versteckt". Dies wird dadurch sichergestellt, dass der Abstand der in dem ersten Streckenabschnitt angeordneten streckenseitigen Einrichtung von dem zweiten Streckenabschnitt derart bemessen ist, dass beim Empfang der Statusinformation durch das spurgebundene Fahrzeug ein kürzestes in dem spurgebundenen Verkehrssystem betriebenes Fahrzeug nicht in den zwischen dem spurgebundenen Fahrzeug und dem zweiten Streckenabschnitt gelegenen Teil des ersten Streckenabschnitts passt. Dies bedeutet, dass der Abstand zwischen der streckenseitigen Einrichtung und dem benachbarten zweiten Streckenabschnitt so klein ist, dass ein in dem Bereich angeordnetes anderes spurgebundenes Fahrzeug zwangsläufig in den zweiten Streckenabschnitt hineinragen würde (oder aber bereits mit dem spurgebundenen Fahrzeug kollidiert wäre). Hierbei ist die Position der streckenseitigen Einrichtung derart gewählt beziehungsweise das Verfahren derart ausgeführt, dass ein entsprechendes anderes Fahrzeug auch unter Berücksichtigung von Toleranzen, Latenzzeiten (etwa bezogen auf eine Erkennung des zweiten Streckenabschnitts als belegt) und Fahrzeugüberhängen als den zweiten Streckenabschnitt belegend detektiert werden würde.

Hierdurch wird es gemäß dem dritten Merkmal des erfindungsgemäßen Verfahrens ermöglicht, dass seitens des spurgebundenen Fahrzeugs basierend auf der empfangenen Statusinformation der zwischen dem spurgebundenen Fahrzeug und dem zweiten Streckenabschnitt gelegene Teil des ersten Streckenabschnitts als frei von anderen spurgebundenen Fahrzeugen erkannt beziehungsweise bestimmt oder festgestellt wird. Dabei sind in Bezug auf die Vorgehensweise bei der Erkennung beziehungsweise Bestimmung des betreffenden Teils des ersten Streckenabschnitts als frei von anderen beziehungsweise sonstigen spurgebundenen Fahrzeugen unterschiedliche Vorgehensweisen möglich.

So ist es einerseits denkbar, dass bereits allein aufgrund des Empfangs der Statusinformation seitens des spurgebundenen Fahrzeugs Gewissheit dahingehend besteht, dass der zwischen der streckenseitigen Einrichtung und dem zweiten Streckenabschnitt liegende Teil des ersten Streckenabschnitts frei von anderen spurgebundenen Fahrzeugen ist. Dies setzt somit voraus, dass ausschließlich solche streckenseitigen Einrichtungen eine entsprechende Statusinformation aussenden, die tatsächlich in einem Abstand, der derart bemessen ist, dass beim Empfang der Statusinformation durch das spurgebundene Fahrzeug ein kürzestes in dem spurgebundenen Verkehrssystem betriebenes Fahrzeug nicht in den zwischen dem spurgebundenen Fahrzeug und dem zweiten Streckenabschnitt gelegenen Teil des ersten Streckenabschnitts passt, von dem zweiten Streckenabschnitt angeordnet sind.

Sofern dies nicht gewährleistet sein sollte oder gegebenenfalls auch im Sinne einer zusätzlichen Sicherheitsprüfung, besteht darüber hinaus auch die Möglichkeit, dass seitens des spurgebundenen Fahrzeugs eine zusätzliche Prüfung der Gültigkeit beziehungsweise Anwendbarkeit der empfangenen Statusinformation vorgenommen wird. Dies kann beispielsweise derart geschehen, dass von der streckenseitigen Einrichtung eine Identität derselben empfangen wird und anhand der empfangenen Identität seitens des spurgebundenen Fahrzeugs eine Überprüfung dahingehend vorgenommen wird, dass es sich bei der betreffenden streckenseitigen Einrichtung tatsächlich um eine solche handelt, die für das beschriebene Verfahren verwendet werden kann beziehungsweise darf. Zusätzlich oder alternativ hierzu ist es beispielsweise auch denkbar, dass seitens des spurgebundenen Fahrzeugs anhand der empfangenen Identität beispielsweise unter Verwendung eines elektronischen Streckenatlasses die Position der streckenseitigen Einrichtung ermittelt und der Abstand zu dem nachfolgenden zweiten Streckenabschnitt berechnet und mit einem Referenzwert verglichen wird.

Unabhängig davon, ob seitens des spurgebundenen Fahrzeugs eine entsprechende weitergehende Prüfung durchgeführt wird oder nicht, ermöglicht es die empfangene Statusinformation dem spurgebundenen Fahrzeug den zwischen der streckenseitigen Einrichtung und dem zweiten Streckenabschnitt liegenden Teil des ersten Streckenabschnitts als frei von anderen spurgebundenen Fahrzeugen zu erkennen. Dies bedeutet, dass sich kein anderes beziehungsweise sonstiges spurgebundenes Fahrzeug in dem betreffenden Teil des ersten Streckenabschnitts aufhält. Dabei kann dieser Teil des ersten Streckenabschnitts in Fahrtrichtung des spurgebundenen Fahrzeugs gesehen vor oder hinter diesem liegen. Im Ergebnis liegt dem spurgebundenen Fahrzeug damit eine Information dahingehend vor, dass die vor beziehungsweise hinter ihm liegende Strecke zumindest bis zum Ende des zweiten Streckenabschnitts frei von sonstigen Fahrzeugen ist. Diese Information kann in der Folge im Rahmen des Betriebs des spurgebundenen Verkehrssystems, insbesondere im Rahmen der Steuerung und Sicherung des spurgebundenen Fahrzeugs sowie gegebenenfalls weiterer spurgebundener Fahrzeuge, verwendet werden.

Das erfindungsgemäße Verfahren weist den grundlegenden Vorteil auf, dass der zwischen der streckenseitigen Einrichtung und dem zweiten Streckenabschnitt liegende Teil des ersten Streckenabschnitts von dem spurgebundenen Fahrzeug selbst als frei von sonstigen spurgebundenen Fahrzeugen erkannt wird. Da eine Übertragung der Statusinformation von der streckenseitigen Einrichtung an das spurgebundene Fahrzeug nahezu verzögerungsfrei möglich ist, ist dem spurgebundenen Fahrzeug im Wesentlichen im Moment des Passierens der streckenseitigen Einrichtung bekannt, dass sich in dem zwischen der streckenseitigen Einrichtung und dem zweiten Streckenabschnitt gelegenen Teil des ersten Streckenabschnitts sowie in dem angrenzenden zweiten Streckenabschnitt keine anderen spurgebundenen Fahrzeuge aufhalten. Damit ist eine entsprechende verzögerungsfreie Berücksichtigung dieser Sachlage durch das spurgebundene Fahrzeug möglich. Hierbei weist das erfindungsgemäße Verfahren weiterhin insbesondere den Vorteil auf, dass es im Wesentlichen keine Abhängigkeit von der jeweiligen Geschwindigkeit des spurgebundenen Fahrzeugs aufweist, d.h. bei vergleichsweise hohen Geschwindigkeiten ebenso gut funktioniert wie bei vergleichsweise niedrigen Geschwindigkeiten.

Ein weiterer Vorteil ist darin zu sehen, dass zur Erkennung des zwischen der streckenseitigen Einrichtung und dem zweiten Streckenabschnitt liegenden Teils des ersten Streckenabschnitts als frei von anderen spurgebundenen Fahrzeugen eine Übertragung der Position des spurgebundenen Fahrzeugs an eine streckenseitige Steuereinrichtung nicht erforderlich ist. So wäre es grundsätzlich alternativ zu dem erfindungsgemäßen Verfahren denkbar, die Information in Bezug auf die aktuelle Position des spurgebundenen Fahrzeugs und den Belegungszustand des zweiten Streckenabschnitts streckenseitig zusammenzuführen. Aufgrund der für eine entsprechende Kommunikation zwischen dem spurgebundenen Fahrzeug und der entsprechenden streckenseitigen Steuereinrichtung üblicherweise verwendeten Funkkommunikation würde sich hierbei jedoch aufgrund der auftretenden beziehungsweise zu berücksichtigenden Verzögerungszeiten eine Abhängigkeit von der Geschwindigkeit des spurgebundenen Fahrzeugs ergeben. So könnte in diesem Fall die Situation entstehen, dass das spurgebundene Fahrzeug zu dem Zeitpunkt, zu dem seitens der streckenseitigen Steuereinrichtung eine Position von dem spurgebundenen Fahrzeug empfangen wird, die in einem Abstand zu dem zweiten Streckenabschnitt liegt, der derart bemessen ist, dass beim Empfang der Statusinformation durch das spurgebundene Fahrzeug ein kürzestes in dem spurgebundenen Verkehrssystem betriebenes Fahrzeug nicht in den zwischen dem spurgebundenen Fahrzeug und dem zweiten Streckenabschnitt gelegenen Teil des ersten Streckenabschnitts passt, das spurgebundene Fahrzeug bereits den zweiten Streckenabschnitt erreicht und diesen damit selbst belegt hat. In diesem Fall wäre somit keine Aussage dahingehend möglich, ob sich in dem ersten und/oder zweiten Streckenabschnitt andere spurgebundene Fahrzeuge aufhalten oder nicht. Im Vergleich hierzu weist das erfindungsgemäße Verfahren den Vorteil auf, dass das spurgebundene Fahrzeug die Statusinformation am Ort der streckenseitigen Einrichtung empfängt und damit zum gleichen Zeitpunkt gewährleistet ist, dass sich zwischen der streckenseitigen Einrichtung und dem Beginn des zweiten Streckenabschnitts kein anderes spurgebundenes Fahrzeug aufhält.

In Bezug auf den Ursprung der von der streckenseitigen Einrichtung ausgesendeten Statusinformation ist zu beachten, dass auch moderne, kommunikationsbasierte Systeme zur Steuerung und Sicherung von Verkehrssystemen, beispielsweise in Form von CTBC-Systemen, häufig zumindest noch als Rückfallebene ein Freimeldesystem aufweisen. Gleiches kann an Systemgrenzen gelten, beispielsweise zu Depots oder Strecken mit anderen Zugsicherungssystemen, um an diesen Systemgrenzen eine Aufnahme von Zügen beispielsweise in den CBTC-Betrieb zu ermöglichen. Im Rahmen des erfindungsgemäßen Verfahrens können entsprechende Freimeldesysteme vorteilhafterweise verwendet werden, wobei das erfindungsgemäße Verfahren insbesondere in Sondersituationen, d.h**.** beispielsweise einer Aufnahme eines Fahrbetriebs nach einer Störung, zum Tragen beziehungsweise zum Einsatz kommen kann.

Für den Fall, dass der zweite Streckenabschnitt nicht frei von spurgebundenen Fahrzeugen ist, besteht einerseits die Möglichkeit, dass seitens der streckenseitigen Einrichtung auch in diesem Fall eine entsprechende Statusinformation ausgesendet wird. Damit liegt diese Information dem spurgebundenen Fahrzeug vor, wodurch diesem zusätzlich auch bekannt ist, dass es in der betreffenden Situation nicht möglich ist, den zwischen der streckenseitigen Einrichtung und dem zweiten Streckenabschnitt liegenden Teil des ersten Streckenabschnitts als frei von sonstigen spurgebundenen Fahrzeugen zu erkennen. Andererseits besteht beispielsweise auch die Möglichkeit, dass für den Fall, dass der zweite Streckenabschnitt belegt ist, seitens der streckenseitigen Einrichtung keinerlei entsprechende Statusinformation ausgesendet wird. In diesem Fall wird seitens des spurgebundenen Fahrzeugs somit keine Information empfangen oder aber lediglich eine solche Information, die keine Statusinformation in Bezug auf den Belegungszustand des zweiten Streckenabschnitts enthält.

Das erfindungsgemäße Verfahren kann grundsätzlich in Zusammenhang mit spurgebundenen Verkehrssystemen beliebiger Art verwendet werden. Dabei kann es sich bei einem entsprechenden Verkehrssystem vorzugsweise insbesondere um ein mittels eines CBTC-Systems betriebenes Eisenbahnsystem handeln.

Im Rahmen des erfindungsgemäßen Verfahrens kann es sich bei der streckenseitigen Einrichtung grundsätzlich um eine streckenseitige Einrichtung beliebiger Art handeln. Wesentlich hierbei ist lediglich, dass mittels der streckenseitigen Einrichtung die Übertragung der Statusinformation am Ort der streckenseitigen Einrichtung erfolgt. Dies bedeutet, dass durch geeignete technische Maßnahmen sicherzustellen ist, dass die Statusinformation seitens des spurgebundenen Fahrzeugs nicht bereits in einem Abstand vor der streckenseitigen Einrichtung empfangen werden kann, der dazu führen könnte, dass ein anderes spurgebundenes Fahrzeug in den Bereich zwischen dem spurgebundenen Fahrzeug und dem Ende des ersten Streckenabschnitts beziehungsweise den Beginn des zweiten Streckenabschnitts "passt". Unter Berücksichtigung dieses Aspekts kann es sich bei der streckenseitigen Einrichtung beispielsweise um eine Gleiskoppelspule, einen Transponder, etwa in Form eines RFID-Tags, oder auch um einen Funksender kurzer Reichweite handeln. Im letzteren Fall kann der entsprechende Funksender in Abhängigkeit von den jeweiligen Gegebenheiten beispielsweise derart ausgestaltet sein, dass er eine Reichweite in der Größenordnung von lediglich einem oder wenigen Metern aufweist. Die entsprechende Reichweite ist hierbei bei der Positionierung der streckenseitigen Einrichtung in Form des Funksenders zu berücksichtigen, um zu gewährleisten, dass bei Empfang der Statusinformation durch das spurgebundene Fahrzeug der Abstand des spurgebundenen Fahrzeugs zu dem zweiten Streckenabschnitt immer derart bemessen ist, dass ein kürzestes in dem spurgebundenen Verkehrssystem betriebenes Fahrzeug nicht in den zwischen dem spurgebundenen Fahrzeug und dem zweiten Streckenabschnitt gelegenen Teil des ersten Streckenabschnitts passt.

Gemäß einer besonders bevorzugten Weiterbildung des erfindungsgemäßen Verfahrens wird die Statusinformation von einer streckenseitigen Einrichtung in Form einer Balise ausgesendet. Dies ist vorteilhaft, da es sich bei Balisen um betriebsbewährte und vergleichsweise kostengünstige streckenseitige Einrichtungen zur Übertragung von Informationen an ein spurgebundenes Fahrzeug handelt. Dabei werden entsprechende Balisen sowohl in spurgebundenen Verkehrssystemen des Fernverkehrs, wie beispielsweise dem Europäischen Zugbeeinflussungssystem ETCS (European Train Control System), als auch Zugbeeinflussungssystemen des Nahverkehrs, d.h. beispielsweise bei Metrosystemen, verwendet.

Gemäß einer weiteren bevorzugten Ausführungsform kann das erfindungsgemäße Verfahren hierbei derart weitergebildet sein, dass von einem zumindest den zweiten Streckenabschnitt umfassenden Freimeldesystem eine auf den zweiten Streckenabschnitt bezogene Freimeldeinformation an eine streckenseitige elektronische Einheit übertragen wird und die Balise von der streckenseitigen elektronischen Einheit veranlasst wird, ein Telegramm mit der Statusinformation auszusenden, sofern der zweite Streckenabschnitt gemäß der Freimeldeinformation frei von spurgebundenen Fahrzeugen ist. Diese Ausführungsform des erfindungsgemäßen Verfahrens ist dahingehend vorteilhaft, dass entsprechende streckenseitige elektronische Einheiten, die auch als LEU (Lineside Electronic Unit) bezeichnet werden, als solche ebenfalls bekannt sind und im Zusammenhang mit so genannten Transparentdatenbalisen, die gesteuert durch die streckenseitige elektronische Einheit unterschiedliche Telegramme übertragen können, beispielsweise bei ETCS verwendet werden. Hierbei wird die Balise von der streckenseitigen elektronischen Einheit derart gesteuert, dass ein Telegramm mit der den zweiten Streckenabschnitt als frei von spurgebundenen Fahrzeugen kennzeichnenden Statusinformation lediglich dann ausgesendet wird, wenn der zweite Streckenabschnitt gemäß der Freimeldeinformation frei von spurgebundenen Fahrzeugen ist. Hierzu wird von dem zumindest den zweiten Streckenabschnitt umfassenden Freimeldesystem mittelbar oder unmittelbar eine auf den zweiten Streckenabschnitt bezogene Freimeldeinformation an die streckenseitige elektronische Einheit übertragen, welche diese Information dann in Form der Statusinformation zur Steuerung der Balise verwendet.

Gemäß einer weiteren bevorzugten Ausführungsform des erfindungsgemäßen Verfahrens werden die Streckenabschnitte des Freimeldesystems durch Achszähler oder Gleisstromkreise gebildet. Dies ist vorteilhaft, da es sich bei Achszählern und Gleisstromkreisen um gebräuchliche Komponenten entsprechender Freimeldesysteme handelt.

Vorzugsweise kann das erfindungsgemäße Verfahren auch derart ausgestaltet sein, dass von dem spurgebundenen Fahrzeug eine Information dahingehend, dass der zwischen der streckenseitigen Einrichtung und dem zweiten Streckenabschnitt gelegenen Teil des ersten Streckenabschnitts als frei von anderen spurgebundenen Fahrzeugen erkannt wurde, an eine streckenseitige Steuereinrichtung des spurgebundenen Verkehrssystems übermittelt wird. Dies bietet den Vorteil, dass die betreffende Information in der Folge von der streckenseitigen Steuereinrichtung im Rahmen des Betriebs des spurgebundenen Verkehrssystems verwendet werden kann.

Gemäß einer weiteren besonders bevorzugten Weiterbildung des erfindungsgemäßen Verfahrens wird die von dem spurgebundenen Fahrzeug empfangene Information von der streckenseitigen Steuereinrichtung bei der Steuerung und/oder Sicherung des spurgebundenen Fahrzeugs berücksichtigt. Dies ist vorteilhaft, da hierdurch ein leistungsfähigerer Betrieb des spurgebundenen Fahrzeugs und/oder des spurgebundenen Verkehrssystems erzielt werden kann.

Gemäß einer weiteren besonders bevorzugten Ausführungsform des erfindungsgemäßen Verfahrens kann dies insbesondere derart geschehen, dass bei einem spurgebundenen Fahrzeug in Form eines Schienenfahrzeugs, Streckenabschnitten in Form von Gleisabschnitten und einer streckenseitigen Steuereinrichtung in Form einer Steuereinrichtung eines kommunikationsbasierten Zugbeeinflussungssystems von der streckenseitigen Steuereinrichtung unter Berücksichtigung der empfangenen Information eine Fahrerlaubnis für das spurgebundene Fahrzeug ermittelt wird und/oder ein Übergang des spurgebundenen Fahrzeugs in einen Moving-Block-Betrieb veranlasst wird. Dies ist vorteilhaft, da die Ermittlung einer entsprechenden Fahrerlaubnis und/oder ein Übergang beziehungsweise eine Aufnahme des spurgebundenen Fahrzeugs in einen Moving-Block-Betrieb einen leistungsfähigeren Betrieb des spurgebundenen Fahrzeugs und damit auch des spurgebundenen Verkehrssystems als solchen ermöglicht.

Alternativ zu der zuvor beschriebenen Ausführungsform ist es auch möglich, dass die streckenseitige Steuereinrichtung eine auf den zweiten Streckenabschnitt bezogene Fahrerlaubnis an das spurgebundenen Fahrzeug sendet und diese auf den ersten Streckenabschnitt erweitert wird, sobald der zwischen dem spurgebundenen Fahrzeug und dem zweiten Streckenabschnitt gelegene Teil des ersten Streckenabschnitts als frei von anderen spurgebundenen Fahrzeugen erkannt worden ist.

Die vorliegende Erfindung betrifft darüber hinaus eine Fahrzeugeinrichtung für ein spurgebundenes Fahrzeug eines spurgebundenen Verkehrssystems.

Hinsichtlich der Fahrzeugeinrichtung liegt der vorliegenden Erfindung die Aufgabe zugrunde, eine Fahrzeugeinrichtung für ein spurgebundenes Fahrzeug eines spurgebundenen Verkehrssystems anzugeben, die es auf besonders leistungsfähige und zugleich mit vergleichsweise geringem Aufwand realisierbare Art und Weise ermöglicht, zu erkennen,
dass ein zwischen einem spurgebundenen Fahrzeug und einem zweiten Streckenabschnitt gelegener Teil eines ersten Streckenabschnitts frei von anderen spurgebundenen Fahrzeugen ist.

Diese Aufgabe wird erfindungsgemäß gelöst durch eine Fahrzeugeinrichtung für ein spurgebundenes Fahrzeug eines spurgebundenen Verkehrssystems, mit einer fahrzeugseitigen Empfangseinrichtung zum Empfangen einer einen zweiten Streckenabschnitt als frei von spurgebundenen Fahrzeugen kennzeichnenden Statusinformation von einer streckenseitigen Einrichtung am Ort der streckenseitigen Einrichtung, die in einem ersten Streckenabschnitt in einem Abstand zu dem benachbarten zweiten Streckenabschnitt angeordnet ist, wobei der Abstand derart bemessen ist, dass beim Empfang der Statusinformation durch das spurgebundene Fahrzeug ein kürzestes in dem spurgebundenen Verkehrssystem betriebenes Fahrzeug nicht in einen zwischen dem spurgebundenen Fahrzeug und dem zweiten Streckenabschnitt gelegenen Teil des ersten Streckenabschnitts passt, und mit einer fahrzeugseitigen Steuereinrichtung zum auf der empfangenen Statusinformation basierenden Erkennen des zwischen dem spurgebundenen Fahrzeug und dem zweiten Streckenabschnitt gelegenen Teils des ersten Streckenabschnitts als frei von anderen spurgebundenen Fahrzeugen.

Die Vorteile der erfindungsgemäßen Fahrzeugeinrichtung entsprechen im Wesentlichen denjenigen des erfindungsgemäßen Verfahrens, so dass diesbezüglich auf die entsprechenden vorstehenden Ausführungen verwiesen wird.

Die Erfindung umfasst des Weiteren eine Steuervorrichtung für ein spurgebundenes Verkehrssystem, mit einer erfindungsgemäßen Fahrzeugeinrichtung sowie der streckenseitigen Einrichtung, die in dem ersten Streckenabschnitt in einem Abstand, der derart bemessen ist, dass beim Empfang der Statusinformation durch das spurgebundene Fahrzeug ein kürzestes in dem spurgebundenen Verkehrssystem betriebenes Fahrzeug nicht in den zwischen dem spurgebundenen Fahrzeug und den zweiten Streckenabschnitt gelegenen Teil des ersten Streckenabschnitts passt, zu dem benachbarten zweiten Streckenabschnitt angeordnet ist und ausgebildet ist, die den zweiten Streckenabschnitt als frei von spurgebundenen Fahrzeugen kennzeichnende Statusinformation auszusenden.

Auch hinsichtlich der Vorteile der erfindungsgemäßen Steuervorrichtung sei auf die entsprechenden Ausführungen im Zusammenhang mit dem erfindungsgemäßen Verfahren verwiesen. Darüber hinaus entsprechen auch die Vorteile der im Folgenden aufgeführten bevorzugten Weiterbildungen der erfindungsgemäßen Steuervorrichtung denjenigen der entsprechenden bevorzugten Weiterbildung des erfindungsgemäßen Verfahrens, so dass auch diesbezüglich auf die entsprechenden vorstehenden Erläuterungen verwiesen wird.

Vorzugsweise kann die erfindungsgemäße Steuervorrichtung derart weitergebildet sein, dass die streckenseitige Einrichtung eine Balise ist.

Gemäß einer weiteren besonders bevorzugten Ausführungsform ist die erfindungsgemäße Steuervorrichtung derart ausgebildet, dass eine streckenseitige elektronische Einheit vorgesehen ist zum Empfangen einer auf den zweiten Streckenabschnitt bezogenen Freimeldeinformation von einem zumindest den zweiten Streckenabschnitt umfassenden Freimeldesystem und die streckenseitige elektronische Einheit die Balise veranlasst, ein Telegramm mit der Statusinformation auszusenden, sofern der zweite Streckenabschnitt gemäß der Freimeldeinformation frei von spurgebundenen Fahrzeugen ist.

Bei einer bevorzugten Weiterbildung der erfindungsgemäßen Steuervorrichtung sind die Streckenabschnitte des Freimeldesystems durch Achszähler oder Gleisstromkreise gebildet.

Vorzugsweise kann die erfindungsgemäße Steuervorrichtung auch derart ausgestaltet sein, dass eine streckenseitige Steuereinrichtung des spurgebundenen Verkehrssystems vorgesehen ist und die Fahrzeugeinrichtung ausgebildet ist, eine Information dahingehend, dass der zwischen der streckenseitigen Einrichtung und dem zweiten Streckenabschnitt gelegene Teil des ersten Streckenabschnitts als frei von sonstigen spurgebundenen Fahrzeugen erkannt wurde, an die streckenseitige Steuereinrichtung zu übermitteln.

Gemäß einer weiteren besonders bevorzugten Ausführungsform der erfindungsgemäßen Steuervorrichtung ist die streckenseitige Steuereinrichtung ausgebildet, die von der Fahrzeugeinrichtung empfangene Information bei der Steuerung und/oder Sicherung des spurgebundenen Fahrzeugs zu berücksichtigen.

Vorzugsweise kann die erfindungsgemäße Steuervorrichtung auch derart weitergebildet sein, dass bei einem spurgebundenen Fahrzeug in Form eines Schienenfahrzeugs, Streckenabschnitten in Form von Gleisabschnitten und einer streckenseitigen Steuereinrichtung in Form einer Steuereinrichtung eines kommunikationsbasierten Zugbeeinflussungssystems die streckenseitige Steuereinrichtung ausgebildet ist, unter Berücksichtigung der empfangenen Information eine Fahrerlaubnis für das spurgebundene Fahrzeug zu ermitteln und/oder einen Übergang des spurgebundenen Fahrzeugs in einen Moving-Block-Betrieb zu veranlassen.

Die Erfindung umfasst darüber hinaus ein spurgebundenes Verkehrssystem mit einer erfindungsgemäßen Steuervorrichtung beziehungsweise einer Steuervorrichtung gemäß einer der zuvor beschriebenen bevorzugten Weiterbildungen der erfindungsgemäßen Steuervorrichtung sowie mit dem spurgebundenen Fahrzeug.

Im Folgenden wird die Erfindung anhand von Ausführungsbeispielen näher erläutert. Hierzu zeigt die
- Figur: in einer schematischen Skizze zur Erläuterung eines Ausführungsbeispiels des erfindungsgemäßen Verfahrens ein Ausführungsbeispiel eines erfindungsgemäßen spurgebundenen Verkehrssystems mit einem Ausführungsbeispiel der erfindungsgemäßen Fahrzeugeinrichtung sowie einem Ausführungsbeispiel der erfindungsgemäßen Steuervorrichtung.

In der Figur ist ein spurgebundenes Verkehrssystem 1 erkennbar. Dieses umfasst eine Strecke 10, die im Rahmen des vorliegenden Ausführungsbeispiels als Gleis ausgebildet ist. Dies bedeutet, dass es sich bei dem spurgebundenen Verkehrssystem 1 im Rahmen des Ausführungsbeispiels um ein Eisenbahnsystem handelt.

Die Strecke 10 ist in einen ersten Streckenabschnitt 11 und einen zweiten Streckenabschnitt 12 unterteilt, wobei die beiden Streckenabschnitte 11, 12 durch Radsensoren beziehungsweise Achszähler 21, 22 und 23 begrenzt sind. Die Achszähler 21, 22, 23 sind Bestandteil eines Gleisfreimeldesystems und im Rahmen dieses Systems an eine Freimeldeeinrichtung 24 angebunden. Dabei besteht die Funktion der Freimeldeeinrichtung 24 im Wesentlichen darin, basierend auf von den Achszählern 21, 22, 23 übermittelten Signalen beziehungsweise Zählerständen einen jeweiligen Belegungszustand der Streckenabschnitte 11, 12 zu ermitteln und diesen übergeordneten Systemen, etwa in Form eines Stellwerkssystems oder eines Zugbeeinflussungssystems, bereitzustellen.

Als weitere streckenseitige Komponente ist in der Figur eine streckenseitige Einrichtung 30 in Form einer Balise erkennbar, die an eine streckenseitige elektronische Einheit 31 angebunden ist. Dabei sei angenommen, dass es sich bei der streckenseitigen elektronischen Einheit 31 um eine auch als LEU (Lineside Electronic Unit) bezeichnete Komponente und bei der streckenseitigen Einrichtung 30 um eine Balise in Form einer Transparentdatenbalise handelt.

Weiterhin ist in der Figur eine streckenseitige Steuereinrichtung 40 angedeutet, bei der es sich um eine zentrale Steuereinrichtung eines Zugbeeinflussungs- beziehungsweise Zugsicherungssystems handeln soll. Die streckenseitige Steuereinrichtung 40 weist eine Kommunikationseinrichtung 41 auf, mittels derer der streckenseitigen Steuereinrichtung 40 eine Kommunikation mit auf der Strecke 10 verkehrenden spurgebundenen Fahrzeugen möglich ist. Darüber hinaus ist die streckenseitige Steuereinrichtung 40 an die Freimeldeeinrichtung 24 angebunden.

In der Figur ist ein spurgebundenes Fahrzeug 50 in einer Situation gezeigt, in der sich das spurgebundene Fahrzeug 50 in Form des Schienenfahrzeugs in dem ersten Streckenabschnitt 11 befindet und in einer Fahrtrichtung 51 auf den zweiten Streckenabschnitt 12 zubewegt.

Das spurgebundene Fahrzeug 50 weist eine Fahrzeugeinrichtung 52 auf, die eine fahrzeugseitige Empfangseinrichtung 53 in Form einer Balisenantenne, eine fahrzeugseitige Steuereinrichtung 54 sowie eine fahrzeugseitige Kommunikationseinrichtung 55 umfasst. Dabei kann die fahrzeugseitige Steuereinrichtung 54 beispielsweise als Fahrzeuggerät eines Zugbeeinflussungssystems ausgebildet sein. Über die fahrzeugseitige Kommunikationseinrichtung 55 ist es der fahrzeugseitigen Steuereinrichtung 54 hierbei möglich, Informationen an die streckenseitige Steuereinrichtung 40 zu übertragen beziehungsweise entsprechende Informationen und Fahrbefehle, etwa in Form einer so genannten "Movement Authority", von dieser zu empfangen.

Durch die streckenseitige Einrichtung 30, die streckenseitige elektronische Einheit 31, die streckenseitige Steuereinrichtung 40, die Kommunikationseinrichtung 41 und die Fahrzeugeinrichtung 52 mit der fahrzeugseitigen Empfangseinrichtung 53, der fahrzeugseitigen Steuereinrichtung 54 und der fahrzeugseitigen Kommunikationseinrichtung 55 wird zusammen eine Steuervorrichtung 60 gebildet.

Entsprechend der Darstellung der Figur befindet sich das spurgebundene Fahrzeug 50 dahingehend an dem Ort der streckenseitigen Einrichtung 30, dass die fahrzeugseitige Einrichtung 53 über der streckenseitigen Einrichtung 30 in Form der Balise angeordnet ist und damit eine Informationsübertragung von der streckenseitigen Einrichtung 30 an die fahrzeugseitige Empfangseinrichtung 53 möglich ist.

Die streckenseitige Einrichtung 30 ist in dem ersten Streckenabschnitt 11 in einem Abstand d von dem zweiten Streckenabschnitt angeordnet. Dabei ist der Abstand d derart bemessen, dass beim Empfang der Statusinformation durch das spurgebundene Fahrzeug 50 ein kürzestes in dem spurgebundenen Verkehrssystem betriebenes Fahrzeug nicht in den zwischen dem spurgebundenen Fahrzeug 50 und dem benachbarten zweiten Streckenabschnitt 12 gelegenen Teil des ersten Streckenabschnitts 11 passt. Dies ist in der Figur dadurch verdeutlicht, dass ein entsprechendes "virtuelles" Fahrzeug 70 eingezeichnet ist, wodurch erkennbar ist, dass dieses Fahrzeug 70, dessen Länge der Länge des kürzesten in dem spurgebundenen Verkehrssystem 1 betriebenen Fahrzeug entspricht, in der in der Figur gezeigten Situation zwingend eine Belegungsmeldung des zweiten Streckenabschnitts 12 auslösen würde. Dies würde somit dazu führen, dass seitens des Freimeldesystems beziehungsweise der Freimeldeeinrichtung 24 desselben eine Belegung des zweiten Streckenabschnitts 12 erkannt und gemeldet werden würde. An dieser Stelle sei nachdrücklich darauf hingewiesen, dass es sich bei der Darstellung der Figur lediglich um eine schematische Skizze zur Veranschaulichung von Ausführungsbeispielen der Erfindung handelt, so dass insbesondere Längen und Entfernungen nicht maßstabsgetreu gezeigt sind.

Wie in der Figur gezeigt, ist die streckenseitige elektronische Einheit 31 mit der Freimeldeeinrichtung 24 kommunikationstechnisch verbunden. Damit liegt der streckenseitigen elektronischen Einheit 31 eine auf den zweiten Streckenabschnitt 12 bezogene Freimeldeinformation vor beziehungsweise diese wird von dem zumindest den zweiten Streckenabschnitt 12 umfassenden Freimeldesystem an die streckenseitige elektronische Einheit 31 übertragen.

Basierend auf der betreffenden Freimeldeinformation wird die streckenseitige Einrichtung 30 in Form der Balise von der streckenseitigen elektronischen Einheit 31 veranlasst, ein Telegramm mit einer Statusinformation auszusenden. Da sich entsprechend der Darstellung der Figur kein sonstiges beziehungsweise anderes spurgebundenes Fahrzeug in dem zweiten Streckenabschnitt 12 aufhält, wird somit von der streckenseitigen Einrichtung 30 eine den zweiten Streckenabschnitt 12 als frei von spurgebundenen Fahrzeugen kennzeichnende Statusinformation ausgesendet. Diese von der streckenseitigen Einrichtung 30 ausgesendete Statusinformation wird durch das den ersten Streckenabschnitt 11 in Richtung des zweiten Streckenabschnitts 12 befahrende spurgebundene Fahrzeug 50 am Ort der streckenseitigen Einrichtung 30 empfangen. Dabei wird vorteilhafterweise ausgenutzt, dass eine Übertragung in einem Balisensystem ausschließlich in einem räumlich eng um die Position der Balise begrenzten Bereich erfolgt. Hierdurch wird gewährleistet, dass die Statusinformation von der fahrzeugseitigen Empfangseinrichtung 53 im Wesentlichen ausschließlich am Ort der streckenseitigen Einrichtung 30 empfangen wird, so dass eine punktförmige Übertragung der Statusinformation erfolgt. Damit ist sichergestellt, dass der Abstand d zwischen dem spurgebundenen Fahrzeug 50 und dem zweiten Streckenabschnitt 12 zu dem betreffenden Zeitpunkt derart bemessen ist, dass beim Empfang der Statusinformation durch das spurgebundene Fahrzeug 50 ein kürzestes in dem spurgebundenen Verkehrssystem betriebenes Fahrzeug 70 nicht in den zwischen dem spurgebundenen Fahrzeug 50 und dem zweiten Streckenabschnitt 12 gelegenen Teil des ersten Streckenabschnitts 11 passt. Somit kann ausgeschlossen werden, dass sich in dem Bereich zwischen dem spurgebundenen Fahrzeug 50 und dem den Beginn des zweiten Streckenabschnitts 12 markierenden Achszähler 23 ein anderes spurgebundenes Fahrzeug aufhält. Folglich wird seitens des spurgebundenen Fahrzeugs 50 basierend auf der empfangenen Statusinformation erkannt, dass (auch) der zwischen der streckenseitigen Einrichtung 30 und dem zweiten Streckenabschnitt 12 liegende Teil des ersten Streckenabschnitts 11 frei von anderen beziehungsweise sonstigen spurgebundenen Fahrzeugen ist.

Im weiteren Verlauf kann von dem spurgebundenen Fahrzeug 50 eine Information dahingehend, dass der zwischen der streckenseitigen Einrichtung 30 und dem zweiten Streckenabschnitt 12 liegende Teil des ersten Streckenabschnitts 11 als frei von sonstigen spurgebundenen Fahrzeugen erkannt wurde, an die streckenseitige Steuereinrichtung 40 des spurgebundenen Verkehrssystems 1 übermittelt werden. Die von dem spurgebundenen Fahrzeug 50 empfangene Information kann von der streckenseitigen Steuereinrichtung 40 sodann bei der Steuerung und/oder Sicherung des spurgebundenen Fahrzeugs 50 berücksichtigt werden. Im Falle eines spurgebundenen Fahrzeugs 50 in Form eines Schienenfahrzeugs, Streckenabschnitten 11, 12 in Form von Gleisabschnitten und einer streckenseitigen Steuereinrichtung 40 in Form einer Steuereinrichtung eines kommunikationsbasierten Zugbeeinflussungssystems kann dies insbesondere bedeuten, dass von der streckenseitigen Steuereinrichtung 40 unter Berücksichtigung der empfangenen Information eine Fahrerlaubnis für das spurgebundene Fahrzeug 50 ermittelt wird und/oder ein Übergang des spurgebundenen Fahrzeugs 50 in einen Moving-Block-Betrieb veranlasst wird. Im Ergebnis kann somit basierend auf der Erkenntnis, dass sich kein (anderes) spurgebundenes Fahrzeug in dem Bereich in Fahrtrichtung 51 gesehen vor dem spurgebundenen Fahrzeug 50 aufhält, ein leistungsfähigerer Betrieb des spurgebundenen Fahrzeugs 50 beziehungsweise des Verkehrssystems 1 erzielt werden.

Es sei darauf hingewiesen, dass in entsprechender Weise auch der in Fahrtrichtung gesehen hinter dem spurgebundenen Fahrzeug 50 befindliche Teil des ersten Streckenabschnitts betrachtet werden könnte. In diesem Fall würde sich der zweite Streckenabschnitt links an den Achszähler 21 anschließen und im Ergebnis des Verfahrens würde der zwischen dem hinteren Fahrzeugende des spurgebundenen Fahrzeugs 50 und dem Achszähler 21 (beziehungsweise den durch diesen begrenzten zweiten Streckenabschnitt) als frei von anderen spurgebundenen Fahrzeugen erkannt werden.

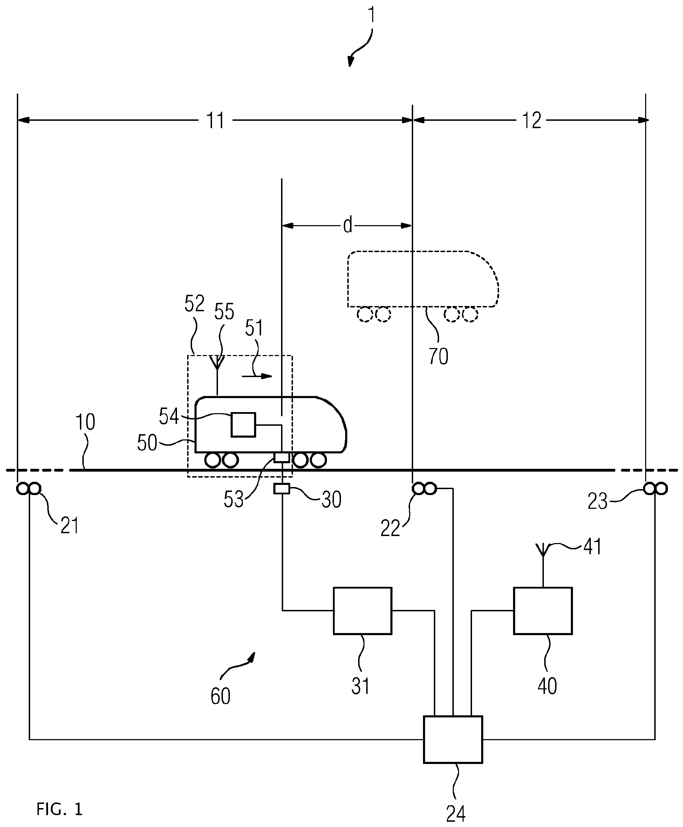

Sofern sich entgegen der Darstellung der Figur 1 in dem zweiten Streckenabschnitt 12 ein anderes spurgebundenes Fahrzeug aufhalten würde, so könnte auch diese Information über die streckenseitige elektronische Einheit 31 und die streckenseitige Einrichtung 30 an das spurgebundene Fahrzeug 50 übermittelt werden. Damit hat das spurgebundene Fahrzeug 50 beziehungsweise seine fahrzeugseitige Steuereinrichtung 54 Kenntnis davon, dass in der in diesem Fall vorliegenden Situation keine Aussage über den Belegungszustand des in Fahrtrichtung 51 vor dem spurgebundenen Fahrzeug 50 liegenden Teils des ersten Streckenabschnitts 11 möglich ist. Alternativ hierzu wäre es auch denkbar, dass im Fall einer Belegung des zweiten Streckenabschnitts 12 durch ein anderes spurgebundenes Fahrzeug keinerlei entsprechende Statusinformation von der streckenseitigen elektronischen Einheit 31 über die streckenseitige Einrichtung 30 an das spurgebundene Fahrzeug 50 übermittelt wird.

Gemäß den vorstehenden Ausführungen im Zusammenhang mit den beschriebenen Ausführungsbeispielen ermöglichen es das erfindungsgemäße Verfahren sowie die zugehörigen Vorrichtungen, eine zuverlässige Aussage in Bezug auf eine Belegung des in Fahrtrichtung 51 gesehenen vor und/oder hinter dem spurgebundenen Fahrzeug 50 liegenden Teils des ersten Gleisabschnitts 11 zu gewinnen. Dies ist insbesondere nach Störungen oder im Rahmen einer Betriebsaufnahme des spurgebundenen Fahrzeugs 50 beziehungsweise des spurgebundenen Verkehrssystems 1 in der Praxis von erheblicher Bedeutung, da hierdurch ein schnellstmöglicher Übergang in einen Normalbetrieb erreicht werden kann.

## Patentansprüche

1. Verfahren zum Betreiben eines spurgebundenen Verkehrssystems (1), wobei
- von einer in einem ersten Streckenabschnitt (11) in einem Abstand (d) zu einem benachbarten zweiten Streckenabschnitt (12) angeordneten streckenseitigen Einrichtung (30) eine den zweiten Streckenabschnitt (12) als frei von spurgebundenen Fahrzeugen kennzeichnende Statusinformation ausgesendet wird,
- die ausgesendete Statusinformation durch ein den ersten Streckenabschnitt (11) befahrendes spurgebundenes Fahrzeug (50) am Ort der streckenseitigen Einrichtung (30) empfangen wird, wobei der Abstand (d) der streckenseitigen Einrichtung (30) von dem zweiten Streckenabschnitt (12) derart bemessen ist, dass beim Empfang der Statusinformation durch das spurgebundene Fahrzeug (50) ein kürzestes in dem spurgebundenen Verkehrssystem (1) betriebenes Fahrzeug (70) nicht in einen zwischen dem spurgebundenen Fahrzeug (50) und dem zweiten Streckenabschnitt (12) gelegenen Teil des ersten Streckenabschnitts (11) passt, und
- seitens des spurgebundenen Fahrzeugs (50) basierend auf der empfangenen Statusinformation der zwischen dem spurgebundenen Fahrzeug (50) und dem zweiten Streckenabschnitt (12) gelegene Teil des ersten Streckenabschnitts (11) als frei von anderen spurgebundenen Fahrzeugen erkannt wird.

2. Verfahren nach Anspruch 1,
wobei
die Statusinformation von einer streckenseitigen Einrichtung (30) in Form einer Balise ausgesendet wird.

3. Verfahren nach Anspruch 2,
wobei
- von einem zumindest den zweiten Streckenabschnitt (12) umfassenden Freimeldesystem (21, 22, 23, 24) eine auf den zweiten Streckenabschnitt (12) bezogene Freimeldeinformation an eine streckenseitige elektronische Einheit (31) übertragen wird und
- die Balise von der streckenseitigen elektronischen Einheit (31) veranlasst wird, ein Telegramm mit der Statusinformation auszusenden, sofern der zweite Streckenabschnitt (12) gemäß der Freimeldeinformation frei von spurgebundenen Fahrzeugen ist.

4. Verfahren nach Anspruch 3,
wobei
die Streckenabschnitte (11, 12) des Freimeldesystems (21, 22, 23, 24) durch Achszähler (21, 22, 23) oder Gleisstromkreise gebildet werden.

5. Verfahren nach einem der vorangehenden Ansprüche,
wobei
von dem spurgebundenen Fahrzeug (50) eine Information dahingehend, dass der zwischen dem spurgebundenen Fahrzeug (50) und dem zweiten Streckenabschnitt (12) gelegene Teil des ersten Streckenabschnitts (11) als frei von anderen spurgebundenen Fahrzeugen erkannt wurde, an eine streckenseitige Steuereinrichtung (40) des spurgebundenen Verkehrssystems (1) übermittelt wird.

6. Verfahren nach Anspruch 5,
wobei
die von dem spurgebundenen Fahrzeug (50) empfangene Information von der streckenseitigen Steuereinrichtung (40) bei der Steuerung und/oder Sicherung des spurgebundenen Fahrzeugs (50) berücksichtigt wird.

7. Verfahren nach Anspruch 5 oder 6,
wobei
bei einem spurgebundenen Fahrzeug (50) in Form eines Schienenfahrzeugs, Streckenabschnitten (11, 12) in Form von Gleisabschnitten und einer streckenseitigen Steuereinrichtung (40) in Form einer Steuereinrichtung eines kommunikationsbasierten Zugbeeinflussungssystems von der streckenseitigen Steuereinrichtung (40) unter Berücksichtigung der empfangenen Information eine Fahrerlaubnis für das spurgebundene Fahrzeug (50) ermittelt wird und/oder ein Übergang des spurgebundenen Fahrzeugs (50) in einen Moving-Block-Betrieb veranlasst wird.

8. Fahrzeugeinrichtung (52) für ein spurgebundenes Fahrzeug (50) eines spurgebundenen Verkehrssystems (1), mit
- einer fahrzeugseitigen Empfangseinrichtung (53) zum Empfangen einer einen zweiten Streckenabschnitt (12) als frei von spurgebundenen Fahrzeugen kennzeichnenden Statusinformation von einer streckenseitigen Einrichtung (30) am Ort der streckenseitigen Einrichtung (30), die in einem ersten Streckenabschnitt (11) in einem Abstand (d) zu dem benachbarten zweiten Streckenabschnitt (12) angeordnet ist, wobei der Abstand (d) derart bemessen ist, dass beim Empfang der Statusinformation durch das spurgebundene Fahrzeug (50) ein kürzestes in dem spurgebundenen Verkehrssystem (1) betriebenes Fahrzeug (70) nicht in einen zwischen dem spurgebundenen Fahrzeug (50) und dem zweiten Streckenabschnitt (12) gelegenen Teil des ersten Streckenabschnitts (11) passt, und mit
- einer fahrzeugseitigen Steuereinrichtung (54) zum auf der empfangenen Statusinformation basierenden Erkennen des zwischen dem spurgebundenen Fahrzeug (50) und dem zweiten Streckenabschnitt (12) gelegenen Teils des ersten Streckenabschnitts (11) als frei von anderen spurgebundenen Fahrzeugen.

9. Steuervorrichtung (30, 31, 40, 41, 52-55) für ein spurgebundenes Verkehrssystem (1), mit einer Fahrzeugeinrichtung (52) nach Anspruch 8 sowie der streckenseitigen Einrichtung (30), die in dem ersten Streckenabschnitt (11) in einem Abstand (d), der derart bemessen ist, dass beim Empfang der Statusinformation durch das spurgebundene Fahrzeug (50) ein kürzestes in dem spurgebundenen Verkehrssystem (1) betriebenes Fahrzeug (70) nicht in den zwischen dem spurgebundenen Fahrzeug (50) und den zweiten Streckenabschnitt (12) gelegenen Teil des ersten Streckenabschnitts (11) passt, zu dem benachbarten zweiten Streckenabschnitt (12) angeordnet ist und ausgebildet ist, die den zweiten Streckenabschnitt (12) als frei von spurgebundenen Fahrzeugen kennzeichnende Statusinformation auszusenden.

10. Steuervorrichtung (30, 31, 40, 41, 52-55) nach Anspruch 9,
wobei
die streckenseitige Einrichtung (30) eine Balise ist.

11. Steuervorrichtung (30, 31, 40, 41, 52-55) nach Anspruch 10,
wobei
- eine streckenseitige elektronische Einheit (31) vorgesehen ist zum Empfangen einer auf den zweiten Streckenabschnitt (12) bezogenen Freimeldeinformation von einem zumindest den zweiten Streckenabschnitt (12) umfassenden Freimeldesystem (21, 22, 23, 24) und
- die streckenseitige elektronische Einheit (31) die Balise veranlasst, ein Telegramm mit der Statusinformation auszusenden, sofern der zweite Streckenabschnitt (12) gemäß der Freimeldeinformation frei von spurgebundenen Fahrzeugen ist.

12. Steuervorrichtung (30, 31, 40, 41, 52-55) nach Anspruch 11,
wobei
die Streckenabschnitte (11, 12) des Freimeldesystems (21, 22, 23, 24) durch Achszähler (21, 22, 23) oder Gleisstromkreise gebildet sind.

13. Steuervorrichtung (30, 31, 40, 41, 52-55) nach einem der Ansprüche 9 bis 12,
wobei
eine streckenseitige Steuereinrichtung (40) des spurgebundenen Verkehrssystems (1) vorgesehen ist und die Fahrzeugeinrichtung (52) ausgebildet ist, eine Information dahingehend, dass der zwischen dem spurgebundenen Fahrzeug (50) und dem zweiten Streckenabschnitt (12) gelegene Teil des ersten Streckenabschnitts (11) als frei von anderen spurgebundenen Fahrzeugen erkannt wurde, an die streckenseitige Steuereinrichtung (40) zu übermitteln.

14. Steuervorrichtung (30, 31, 40, 41, 52-55) nach Anspruch 13,
wobei
die streckenseitige Steuereinrichtung (40) ausgebildet ist, die von der Fahrzeugeinrichtung (52) empfangene Information bei der Steuerung und/oder Sicherung des spurgebundenen Fahrzeugs (50) zu berücksichtigen.

15. Steuervorrichtung (30, 31, 40, 41, 52-55) nach Anspruch 13 oder 14,
wobei
bei einem spurgebundenen Fahrzeug (50) in Form eines Schienenfahrzeugs, Streckenabschnitten (11, 12) in Form von Gleisabschnitten und einer streckenseitigen Steuereinrichtung (40) in Form einer Steuereinrichtung eines kommunikationsbasierten Zugbeeinflussungssystems die streckenseitige Steuereinrichtung (40) ausgebildet ist, unter Berücksichtigung der empfangenen Information eine Fahrerlaubnis für das spurgebundene Fahrzeug (50) zu ermitteln und/oder einen Übergang des spurgebundenen Fahrzeugs (50) in einen Moving-Block-Betrieb zu veranlassen.

16. Spurgebundenes Verkehrssystem (1) mit einer Steuervorrichtung (30, 31, 40, 41, 52-55) nach einem der Ansprüche 9 bis 15 sowie mit dem spurgebundenen Fahrzeug (50).

## Claims

1. Method for operating a track-bound traffic system (1), wherein
- a lineside device (30) which is located in a first line section (11) at a distance (d) from an adjacent second line section (12) transmits status information characterising the second line section (12) as being free of track-bound vehicles,
- the transmitted status information is received by a track-bound vehicle (50) traversing the first line section (11) at the location of the lineside device (30), wherein the distance (d) of the lineside device (30) from the second line section (12) is dimensioned such that when the status information is received by the track-bound vehicle (50), a shortest track-bound vehicle (70) operated in the track-bound traffic system (1) does not fit into that part of the first line section (11) which lies between the track-bound vehicle (50) and the second line section (12), and
- on the basis of the received status information, the track-bound vehicle (50) identifies that that part of the first line section (11) which lies between the track-bound vehicle (50) and the second line section (12) is free of other track-bound vehicles.

2. Method according to claim 1,
wherein
the status information is transmitted by a lineside device (30) in the form of a balise.

3. Method according to claim 2,
wherein
- vacancy detection information relating to the second line section (12) is transferred from a vacancy detection system (21, 22, 23, 24) encompassing at least the second line section (12) to a lineside electronic unit (31), and
- the balise is instructed by the lineside electronic unit (31) to transmit a telegram containing the status information if the second line section (12) is free of track-bound vehicles according to the vacancy detection information.

4. Method according to claim 3,
wherein
the line sections (11, 12) of the vacancy detection system (21, 22, 23, 24) are formed by axle counters (21, 22, 23) or track circuits.

5. Method according to one of the preceding claims,
wherein
information to the effect that that part of the first line section (11) which lies between the track-bound vehicle (50) and the second line section (12) has been identified as being free of other track-bound vehicles is sent from the track-bound vehicle (50) to a lineside control device (40) of the track-bound traffic system (1).

6. Method according to claim 5,
wherein
the information received from the track-bound vehicle (50) is taken into consideration by the lineside control device (40) for the purpose of controlling and/or safeguarding the track-bound vehicle (50).

7. Method according to claim 5 or 6,
wherein
assuming a track-bound vehicle (50) in the form of a rail vehicle, line sections (11, 12) in the form of track sections and a lineside control device (40) in the form of a control device of a communication-based train control system, the lineside control device (40) establishes a movement authority for the track-bound vehicle (50) and/or instructs the track-bound vehicle (50) to switch into moving-block operation on the basis of the information received.

8. Vehicle device (52) for a track-bound vehicle (50) of a track-bound traffic system (1), having
- an on-board receive device (53) for receiving status information characterising the second line section (12) as being free of track-bound vehicles from a lineside device (30) at the location of the lineside device (30), this being located in a first line section (11) at a distance (d) from the adjacent second line section (12), wherein said distance (d) is dimensioned such that when the status information is received by the track-bound vehicle (50), a shortest track-bound vehicle (70) operated in the track-bound traffic system (1) does not fit into that part of the first line section (11) which lies between the track-bound vehicle (50) and the second line section (12), and having
- an on-board control device (54) for identifying that, on the basis of the received status information, that part of the first line section (11) which lies between the track-bound vehicle (50) and the second line section (12) is free of other track-bound vehicles.

9. Control apparatus (30, 31, 40, 41, 52-55) for a track-bound traffic system (1), comprising a vehicle device (52) according to claim 8 and the lineside device (30), this being located in the first line section (11) at a distance (d) from the adjacent second line section (12), which distance (d) is dimensioned such that when the status information is received by the track-bound vehicle (50), a shortest track-bound vehicle (70) operated in the track-bound traffic system (1) does not fit into that part of the first line section (11) which lies between the track-bound vehicle (50) and the second line section (12), and being designed to transmit the status information characterising the second line section (12) as being free of track-bound vehicles.

10. Control apparatus (30, 31, 40, 41, 52-55) according to claim 9,
wherein
the lineside device (30) is a balise.

11. Control apparatus (30, 31, 40, 41, 52-55) according to claim 10,
wherein
- a lineside electronic unit (31) is provided for receiving vacancy detection information relating to the second line section (12) from a vacancy detection system (21, 22, 23, 24) encompassing at least the second line section (12), and
- the lineside electronic unit (31) instructs the balise to transmit a telegram containing the status information if the second line section (12) is free of track-bound vehicles according to the vacancy detection information.

12. Control apparatus (30, 31, 40, 41, 52-55) according to claim 11,
wherein
the line sections (11, 12) of the vacancy detection system (21, 22, 23, 24) are formed by axle counters (21, 22, 23) or track circuits.

13. Control apparatus (30, 31, 40, 41, 52-55) according to one of claims 9 to 12,
wherein
a lineside control device (40) of the track-bound traffic system (1) is provided and the vehicle device (52) is designed to send information to the lineside control device (40) to the effect that that part of the first line section (11) which lies between the track-bound vehicle (50) and the second line section (12) has been identified as being free of other track-bound vehicles.

14. Control apparatus (30, 31, 40, 41, 52-55) according to claim 13,
wherein
the lineside control device (40) is designed to take the information received from the vehicle device (52) into consideration for the purpose of controlling and/or safeguarding the track-bound vehicle (50).

15. Control apparatus (30, 31, 40, 41, 52-55) according to claim 13 or 14,
wherein
assuming a track-bound vehicle (50) in the form of a rail vehicle, line sections (11, 12) in the form of track sections and a lineside control device (40) in the form of a control device of a communication-based train control system, the lineside control device (40) is designed to establish a movement authority for the track-bound vehicle (50) and/or to instruct the track-bound vehicle (50) to switch into moving-block operation on the basis of the information received.

16. Track-bound traffic system (1) comprising a control apparatus (30, 31, 40, 41, 52-55) according to one of the claims 9 to 15 and the track-bound vehicle (50).

## Revendications

1. Procédé pour faire fonctionner un système (1) de circulation guidé sur rail, dans lequel
- d'un dispositif (30) sur la voie disposé dans un premier tronçon (11) de voie à une distance (d) d'un deuxième tronçon (12) de voie voisin, on envoie une information de statut caractérisant le deuxième tronçon (12) de voie comme sans véhicule guidé sur rail,
- l'information de statut envoyée est reçue au lieu du dispositif (30) sur la voie par un véhicule (50) guidé sur rail empruntant le premier tronçon (11) de voie, dans lequel la distance (d) du dispositif (30) sur la voie au deuxième tronçon (12) de voie est telle qu'à la réception de l'information de statut par le véhicule (50) guidé sur rail, un véhicule (70) en service dans le système (1) de circulation guidé sur rail ne s'adapte pas dans une partie du premier tronçon (11) de voie entre le véhicule (50) guidé sur rail et le deuxième tronçon (12) de voie, et
- chez le véhicule (50) guidé sur rail, sur la base de l'information de statut reçue, la partie, entre le véhicule (50) guidé sur rail et le deuxième tronçon (12) de voie, du premier tronçon (11) de voie est identifiée comme sans autre véhicule guidé sur rail.

2. Procédé suivant la revendication 1,
dans lequel
l'information de statut est envoyée par un dispositif (30) sur la voie sous la forme d'une balise.

3. Procédé suivant la revendication 2,
dans lequel
- par un système (21, 22, 23, 24) d'indication de libération comprenant au moins le deuxième tronçon (12) de voie, on transmet à une unité (31) électronique sur la voie une information d'indication de libération se rapportant au deuxième tronçon (12) de voie et
- la balise est sollicitée par l'unité (31) électronique sur la voie d'envoyer un télégramme ayant l'information de statut, dans la mesure où le deuxième tronçon (12) de voie est, suivant l'information d'indication de libération, sans véhicule guidé sur rail.

4. Procédé suivant la revendication 3,
dans lequel
les tronçons (11, 12) de voie du système (21, 22, 23, 24) d'indication de liberté sont formés par des compteurs (21, 22, 23) d'essieux ou des circuits de courant de rail.

5. Procédé suivant l'une des revendications précédentes,
dans lequel
on transmet à un dispositif (40) de commande sur la voie du système (1) de circulation guidé sur rail par le véhicule (50) guidé sur rail, une information, suivant laquelle la partie, entre le véhicule (50) guidé sur rail et le deuxième tronçon (12) de voie, du premier tronçon (11) de voie a été identifiée comme sans autre véhicule guidé sur rail.

6. Procédé suivant la revendication 5,
dans lequel
l'information reçue par le véhicule (50) guidé sur rail est prise en compte par le dispositif (40) de commande sur la voie lors de la commande et/ou de la sécurisation du véhicule (50) guidé sur rail.

7. Procédé suivant la revendication 5 ou 6,
dans lequel
pour un véhicule (50) guidé sur rail sous la forme d'un véhicule ferroviaire, de tronçons (11, 12) de voie sous la forme de tronçons de rail et d'un dispositif (40) de commande sur la voie sous la forme d'un dispositif de commande d'un système de contrôle de train reposant sur la communication, on détermine par le dispositif (40) de commande sur la voie, en tenant compte de l'information reçue, une autorisation de conducteur pour le véhicule (50) guidé sur rail et/ou on provoque un passage du véhicule (50) guidé sur rail dans un fonctionnement moving-block.

8. Dispositif (52) de véhicule pour un véhicule (50) guidé sur rail d'un système (1) de circulation guidé sur rail, comprenant
- un dispositif (53) de réception embarqué sur le véhicule pour la réception, par un dispositif (30) sur la voie au lieu du dispositif (30) sur la voie, d'une information de statut caractérisant un deuxième tronçon (12) de voie sans véhicule guidé sur rail, dispositif qui est disposé dans un premier tronçon (11) de voie à une distance (d) du deuxième tronçon (12) de voie voisin, dans lequel la distance (d) est telle qu'à la réception de l'information de statut par le véhicule (50) guidé sur rail, un véhicule (70) en service dans le système (1) de circulation guidé sur rail ne s'adapte pas dans une partie du premier tronçon (11) de voie entre le véhicule (50) guidé sur rail et le deuxième tronçon (12) de voie, et comprenant
- un dispositif (54) de commande embarqué pour l'identification, reposant sur l'information de statut reçue, de la partie entre le véhicule (50) guidé sur rail et le deuxième tronçon (12) de voie du premier tronçon (11) de voie comme sans autre véhicule guidé sur rail.

9. Dispositif (30, 31, 40, 41, 52 - 55) de commande d'un système (1) de circulation guidé sur rail, comprenant un dispositif (52) de véhicule suivant la revendication 8 ainsi que le dispositif (30) sur la voie, qui est disposé par rapport au deuxième tronçon (12) de voie voisin et formé dans le premier tronçon (11) de voie à une distance (d), qui est telle qu'à la réception de l'information de statut par le véhicule (50) guidé sur rail, un véhicule (70) le plus court en service dans le système (1) de circulation guidé sur rail ne s'adapte pas dans la partie du premier tronçon (11) de voie entre le véhicule (50) guidé sur rail et le deuxième tronçon (12) de voie, de manière à envoyer l'information de statut caractérisant le deuxième tronçon (12) de voie comme sans véhicule guidé sur rail.

10. Dispositif (30, 31, 40, 41, 52 - 55) de commande suivant la revendication 9,
dans lequel
le dispositif (30) sur la voie est une balise.

11. Dispositif (30, 31, 40, 41, 52 - 55) de commande suivant la revendication 10,
dans lequel
- il est prévu une unité (31) électronique sur la voie pour la réception d'une information d'indication de libération se rapportant au deuxième tronçon (12) de voie par au moins un système (21, 22, 23, 24) d'indication de libération comprenant le deuxième tronçon (12) de voie et
- l'unité (31) électronique sur la voie fait que la balise envoie un télégramme avec l'information de statut, dès que le deuxième tronçon (12) de voie est, suivant l'information d'indication de libération, sans véhicule guidé sur rail.

12. Dispositif (30, 31, 40, 41, 52 - 55) de commande suivant la revendication 11,
dans lequel
les tronçons (11, 12) de voie du système (21, 22, 23, 24) d'indication de libération sont formés par des compteurs (21, 22, 23) d'essieux ou des circuits de rail.

13. Dispositif (30, 31, 40, 41, 52 - 55) de commande suivant l'une des revendications 9 à 12,
dans lequel
il est prévu un dispositif (40) de commande sur la voie du système (1) de circulation guidé sur rail et le dispositif (52) de véhicule est constitué pour transmettre au dispositif (40) de commande sur la voie une information suivant laquelle la partie, comprise entre le véhicule (50) guidé sur rail et le deuxième tronçon (12) de voie, du premier tronçon (11) de voie a été identifiée comme sans autre véhicule guidé sur rail.

14. Dispositif (30, 31, 40, 41, 52 - 55) suivant la revendication 13,
dans lequel
le dispositif (40) de commande sur la voie est constitué pour tenir compte de l'information reçue par le dispositif (52) de véhicule lors de la commande et/ou de la sécurisation du véhicule (50) guidé sur rail.

15. Dispositif (30, 31, 40, 41, 52 - 55) suivant la revendication 13 ou 14,
dans lequel
pour un véhicule (50) guidé sur rail sous la forme d'un véhicule ferroviaire, de tronçons (11, 12) de voie sous la forme de tronçons de rail et d'un dispositif (40) de commande sur la voie sous la forme d'un dispositif de commande d'un système de contrôle de train reposant sur la communication, le dispositif (40) de commande sur la voie est constitué, en tenant compte de l'information reçue, pour déterminer une autorisation de conducteur pour le véhicule (50) guidé sur rail et/ou pour provoquer un passage du véhicule (50) guidé sur rail dans un fonctionnement moving-block.

16. Système (1) de circulation guidé sur rail comprenant un dispositif (30, 31, 40, 41, 52 - 55) de commande suivant l'une des revendications 9 à 15 ainsi que le véhicule (50) guidé sur rail.
